(19)

Europäisches
Patentamt
European
Patent Office
Office européen
des brevets

(11) **EP 3 474 550 A1**

(12) **EUROPEAN PATENT APPLICATION**

(43) Date of publication:
**24.04.2019 Bulletin 2019/17**

(21) Application number: **17306428.8**

(22) Date of filing: **20.10.2017**

(51) Int Cl.:
**H04N 19/46** *(2014.01)*  **H04N 19/80** *(2014.01)*
**H04N 19/597** *(2014.01)*  **H04N 21/81** *(2011.01)*
**H04N 13/00** *(2018.01)*  **H04N 19/59** *(2014.01)*
**H04N 21/236** *(2011.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **RACAPE, Fabien**
  **35576 Cesson-Sévigné (FR)**
• **GALPIN, Franck**
  **35576 Cesson-Sévigné (FR)**
• **ROBERT, Antoine**
  **35576 Cesson-Sévigné (FR)**

(74) Representative: **Huchet, Anne et al
InterDigital CE Patent Holdings
20, rue Rouget de Lisle
92130 Issy-les-Moulineaux (FR)**

(54) **STEREO OMNIDIRECTIONAL FRAME PACKING**

(57)    Methods and apparatus enable video coding and decoding related to omnidirectional video, such as stereo omnidirectional video with equirectangular projections. For stereo images of a scene, the video image data is portioned, resampled and arranged so that portions representing both images are able to fit within a frame. A message is sent with the frame to describe either the resampling or arrangment information. In at least one embodiment, the resampling is done horizontally. In at least one embodiment, the message is sent within a Supplemental Enhancement Information message. Corresponding operations reverse the process at a decoder, enabling the two stereo images to be recreated.

Figure 28

**Description**

FIELD OF THE INVENTION

The following described aspects relate to the field of video compression generally and to the field of omnidirectional video, particularly.

BACKGROUND OF THE INVENTION

Recently there has been a growth of available large field of view content (up to 360°). Such content is potentially not fully visible by a user watching the content on immersive display devices such as Head Mounted Displays (HMD), smart glasses, PC screens, tablets, smartphones and the like. That means that at a given moment, a user may only be viewing a part of the content. However, a user can typically navigate within the content by various means such as head movement, mouse movement, touch screen, voice and the like. It is typically desirable to encode and decode this content.

SUMMARY OF THE INVENTION

These and other drawbacks and disadvantages of the prior art are addressed by at least one of the described embodiments, which are directed to a method and apparatus for packing of stereo omnidirectional videos, which improves the compacity of such content in the framework of frame packing, which includes two (left and right) view points in the same coded frame.

In at least one of the described embodiments, the arrangement of stereo frames is redefined in the context of frame packing, taking into account the specificity of omnidirectional content, improving the final compression efficiency.

In at least one embodiment, there is provided a method. The method comprises steps for resampling portions of video images representing at least two views of a scene at corresponding times; arranging resampled portions of the at least two views such that said arranged resampled portions fit into a frame; and, encoding the frame, said frame comprising a message indicative of at least one of said arranging and resampling operations.

In at least one other embodiment, there is provided a method. The method comprises steps for decoding a frame of video from a bitstream, also comprising a message; extracting portions of at least two views from said decoded frame; resampling said extracted portions of the at least two views; and, arranging said resampled extracted portions into video images representing the at least two views, wherein at least one of said extracting, resampling and arranging is based on said message.

In another embodiment, there is provided a method according to any of the aforementioned methods, wherein horizontal resampling is used for images representing two views.

In another embodiment, there is provided a method according to any of the aforementioned methods, wherein the message is located in a Supplemental Enhancement Information message.

In another embodiment, there is provided a method according to any of the aforementioned methods, wherein the message conveys information regarding the number of portions each image of each view is divided into and a horizontal resampling ratio.

In another embodiment, there is provided an apparatus. The apparatus comprises a memory and a processor. The processor is configured to perform any variation of the aforementioned method embodiments, for encoding or decoding.

According to another aspect described herein, there is provided a nontransitory computer readable storage medium containing data content generated according to the method of any one of the aforementioned method embodiments, or by the apparatus of any one of the aforementioned apparatus embodiments for playback using a processor.

According to another aspect described herein, there is provided a signal comprising video data generated according to the method of any one of the aforementioned method embodiments for coding a block of video data, or by the apparatus of any one of the aforementioned apparatus embodiments for coding a block of video data, for playback using a processor.

According to another aspect described herein, there is provided a computer program product comprising instructions which, when the program is executed by a computer, cause the computer to carry out the method of any one of the aforementioned method embodiments.

These and other aspects, features and advantages of the present principles will become apparent from the following detailed description of exemplary embodiments, which is to be read in connection with the accompanying drawings.

EP 3 474 550 A1

BRIEF DESCRIPTION OF THE DRAWINGS

Figure 1 illustrates an exemplary system for encoding and decoding omnidirectional videos, according to a specific and non-limiting embodiment,

Figures 2-6 illustrate a system configured to decode, process and render immersive videos according to various embodiments,

Figures 7-9 represents a system with an immersive wall configured to decode, process and render immersive videos according to various embodiments, and

Figures 10-12 represent immersive video rendering devices according to various embodiments.

Figure 13A and 13B illustrate an example of projection from a spherical surface S onto a rectangular picture F,

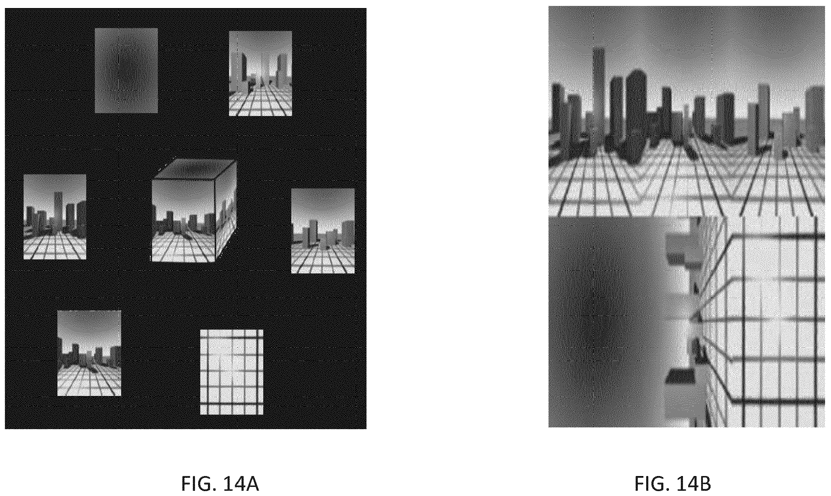

Figure 14A and 14B illustrate an example of projection from a cubic surface S onto six pictures, and a layout of the six faces of a cube projected on a 2D picture,

Figure 15A and 15B illustrate a moving object in a projected picture F of a 3D surface representing an omnidirectional video, and corresponding motion vectors in a block partitioning of the projected picture.

Figures 16A and 16B illustrate mapping from a frame coordinate to rendered frame, and from a rendered frame to an encoded frame.

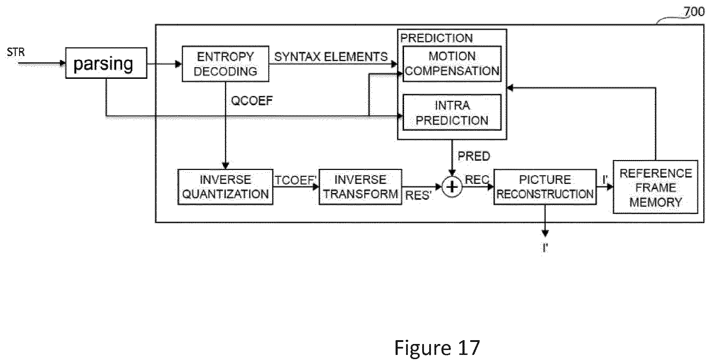

Figure 17 illustrates an example flow chart embodiment of a video decoder to which the general aspects described here can be applied.

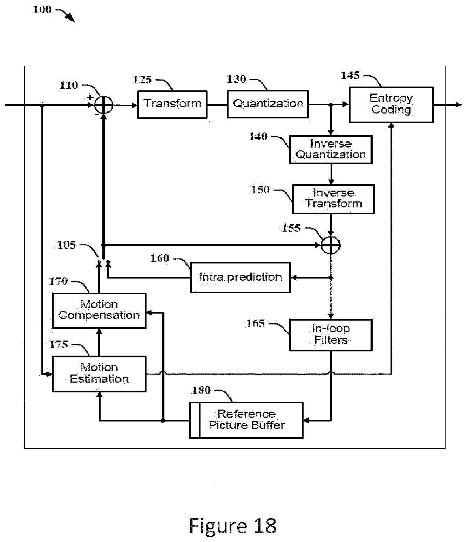

Figure 18 illustrates an example of an encoder to which the described aspects can be applied.

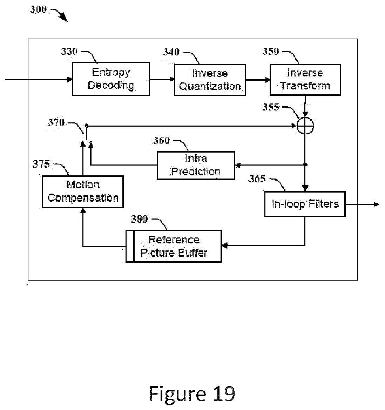

Figure 19 illustrates another example of a decoder to which the described aspects can be applied.

Figure 20 illustrates a classical block subdivision into square coding tree units (CTBs and CBs) using a quadtree splitting.

Figure 21 illustrates an equirectangular mapping, showing an intensity variation depicting horizontal pixel density at top, and at bottom, horizontal density as a function of vertical angle from the equator.

Figure 22 shows a classical top-bottom frame packing arrangement.

Figure 23 shows a distribution of tiles, or portions of images, whose horizontal sizes depend on the resolution of the pixels in the equirectangular frame.

Figure 24 shows an example of a packing distribution for a left view and a right view.

Figure 25 shows an embodiment of a flow diagram for transmitting and receiving two views with a single encoded sequence.

Figure 26 shows an example of an image with subsampled tiles.

Figure 27 shows an example of a proposed frame packing distribution.

Figure 28 shows an example with four portions, or tiles.

Figure 29 illustrates one embodiment of an encoding method according to the described aspects.

Figure 30 illustrates one embodiment of a decoding method according to the described aspects.

Figure 31 illustrates one embodiment of an apparatus for encoding or decoding according to the described aspects.

DETAILED DESCRIPTION

Omnidirectional content is usually projected on a given layout, so that the final content to encode/decode fits in a rectangular frame, which is convenient for processing by existing codecs. Depending on the mapping, geometric distortions might be introduced which can hurt the compression performance. Especially, the motion vector prediction might not be adapted when dealing with equirectangular projection (ERP) mapping. The following embodiments can be extended to other mappings with similar properties as well.

At least one of the embodiments described is used in frame packing adapted to stereo omnidirectional video mapping. Several improvements are made upon prior techniques.

A large field of view content may be, among others, a three-dimension computer graphic imagery scene (3D CGI scene), a point cloud or an immersive video. Many terms might be used to design such immersive videos such as for example virtual Reality (VR), 360, panoramic, $4\pi$, steradians, immersive, omnidirectional, large field of view.

An immersive video typically refers to a video encoded on a rectangular frame that is a two-dimension array of pixels (i.e., element of color information) like a "regular" video. In many implementations, the following processes may be performed. To be rendered, the frame is, first, mapped on the inner face of a convex volume, also called mapping surface (e.g., a sphere, a cube, a pyramid), and, second, a part of this volume is captured by a virtual camera. Images captured by the virtual camera are rendered on the screen of the immersive display device. A stereoscopic video is encoded on one or two rectangular frames, projected on two mapping surfaces which are combined to be captured by two virtual cameras according to the characteristics of the device.

3

Pixels may be encoded according to a mapping function in the frame. The mapping function may depend on the mapping surface. For a same mapping surface, several mapping functions are possible. For example, the faces of a cube may be structured according to different layouts within the frame surface. A sphere may be mapped according to an equirectangular projection or to a gnomonic projection for example. The organization of pixels resulting from the selected projection function modifies or breaks lines continuities, orthonormal local frame, pixel densities and introduces periodicity in time and space. These are typical features that are used to encode and decode videos. Existing encoding and decoding methods usually do not take specificities of immersive videos into account. Indeed, as immersive videos can be 360° videos, a panning, for example, introduces motion and discontinuities that require a large amount of data to be encoded while the content of the scene does not change. Taking immersive videos specificities into account while encoding and decoding video frames would bring valuable advantages to the encoding or decoding methods.

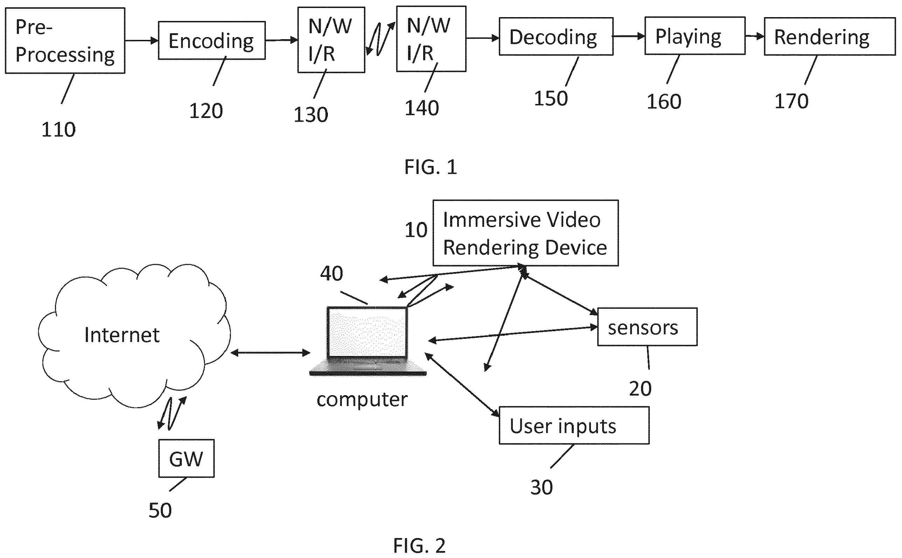

Figure 1 illustrates a general overview of an encoding and decoding system according to a specific and non-limiting embodiment. The system of figure 1 is a functional system. A pre-processing module 110 may prepare the content for encoding by the encoding device 120. The pre-processing module 110 may perform multi-image acquisition, merging of the acquired multiple images in a common space (typically a 3D sphere if we encode the directions), and mapping of the 3D sphere into a 2D frame using, for example, but not limited to, an equirectangular mapping or a cube mapping. The pre-processing module 110 may also accept an omnidirectional video in a particular format (for example, equirectangular) as input, and pre-processes the video to change the mapping into a format more suitable for encoding. Depending on the acquired video data representation, the pre-processing module 110 may perform a mapping space change.

The encoding device 120 and the encoding method will be described with respect to other figures of the specification. After being encoded, the data, which may encode immersive video data or 3D CGI encoded data for instance, are sent to a network interface 130, which can be typically implemented in any network interface, for instance present in a gateway. The data are then transmitted through a communication network, such as internet but any other network can be foreseen. Then the data are received via network interface 140. Network interface 140 can be implemented in a gateway, in a television, in a set-top box, in a head mounted display device, in an immersive (projective) wall or in any immersive video rendering device.

After reception, the data are sent to a decoding device 150. Decoding function is one of the processing functions described in the following figures 2 to 12. Decoded data are then processed by a player 160. Player 160 prepares the data for the rendering device 170 and may receive external data from sensors or users input data. More precisely, the player 160 prepares the part of the video content that is going to be displayed by the rendering device 170. The decoding device 150 and the player 160 may be integrated in a single device (e.g., a smartphone, a game console, a STB, a tablet, a computer, etc.). In other embodiments, the player 160 may be integrated in the rendering device 170.

Several types of systems may be envisioned to perform the decoding, playing and rendering functions of an immersive display device, for example when rendering an immersive video.

A first system, for processing augmented reality, virtual reality, or augmented virtuality content is illustrated in figures 2 to 6. Such a system comprises processing functions, an immersive video rendering device which may be a head mounted display (HMD), a tablet or a smartphone for example and may comprise sensors. The immersive video rendering device may also comprise additional interface modules between the display device and the processing functions. The processing functions can be performed by one or several devices. They can be integrated into the immersive video rendering device or they can be integrated into one or several processing devices. The processing device comprises one or several processors and a communication interface with the immersive video rendering device, such as a wireless or wired communication interface.

The processing device can also comprise a second communication interface with a wide access network such as internet and access content located on a cloud, directly or through a network device such as a home or a local gateway. The processing device can also access a local storage through a third interface such as a local access network interface of Ethernet type. In an embodiment, the processing device may be a computer system having one or several processing units. In another embodiment, it may be a smartphone which can be connected through wired or wireless links to the immersive video rendering device or which can be inserted in a housing in the immersive video rendering device and communicating with it through a connector or wirelessly as well. Communication interfaces of the processing device are wireline interfaces (for example a bus interface, a wide area network interface, a local area network interface) or wireless interfaces (such as a IEEE 802.11 interface or a Bluetooth® interface).

When the processing functions are performed by the immersive video rendering device, the immersive video rendering device can be provided with an interface to a network directly or through a gateway to receive and/or transmit content.

In another embodiment, the system comprises an auxiliary device which communicates with the immersive video rendering device and with the processing device. In such an embodiment, this auxiliary device can contain at least one of the processing functions.

The immersive video rendering device may comprise one or several displays. The device may employ optics such as lenses in front of each of its display. The display can also be a part of the immersive display device like in the case of smartphones or tablets. In another embodiment, displays and optics may be embedded in a helmet, in glasses, or in a visor that a user can wear. The immersive video rendering device may also integrate several sensors, as described later on. The immersive video rendering device can also comprise several interfaces or connectors. It might comprise one or several wireless modules in order to communicate with sensors, processing functions, handheld or other body parts related devices or sensors.

The immersive video rendering device can also comprise processing functions executed by one or several processors and configured to decode content or to process content. By processing content here, it is understood all functions to prepare a content that can be displayed. This may comprise, for instance, decoding a content, merging content before displaying it and modifying the content to fit with the display device.

One function of an immersive content rendering device is to control a virtual camera which captures at least a part of the content structured as a virtual volume. The system may comprise pose tracking sensors which totally or partially track the user's pose, for example, the pose of the user's head, in order to process the pose of the virtual camera. Some positioning sensors may track the displacement of the user. The system may also comprise other sensors related to environment for example to measure lighting, temperature or sound conditions. Such sensors may also be related to the users' bodies, for instance, to measure sweating or heart rate. Information acquired through these sensors may be used to process the content. The system may also comprise user input devices (e.g., a mouse, a keyboard, a remote control, a joystick). Information from user input devices may be used to process the content, manage user interfaces or to control the pose of the virtual camera. Sensors and user input devices communicate with the processing device and/or with the immersive rendering device through wired or wireless communication interfaces.

Using figures 2 to 6, several embodiments are described of this first type of system for displaying augmented reality, virtual reality, augmented virtuality or any content from augmented reality to virtual reality.

Figure 2 illustrates a particular embodiment of a system configured to decode, process and render immersive videos. The system comprises an immersive video rendering device 10, sensors 20, user inputs devices 30, a computer 40 and a gateway 50 (optional).

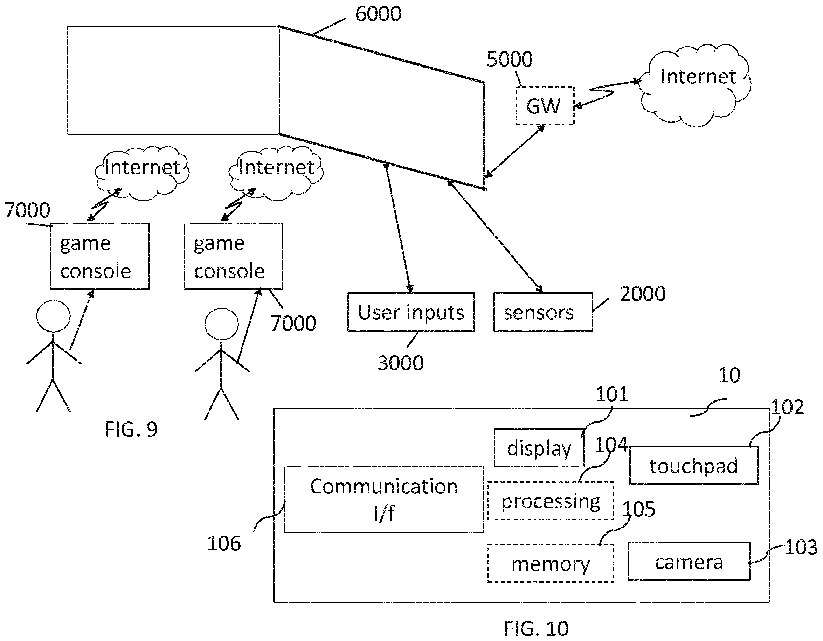

The immersive video rendering device 10, illustrated in Figure 10, comprises a display 101. The display is, for example of OLED or LCD type. The immersive video rendering device 10 is, for instance a HMD, a tablet or a smartphone. The device 10 may comprise a touch surface 102 (e.g., a touchpad or a tactile screen), a camera 103, a memory 105 in connection with at least one processor 104 and at least one communication interface 106. The at least one processor 104 processes the signals received from the sensors 20.

Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement. Data from sensors 20 and user input devices 30 can also be transmitted to the computer 40 which will process the data according to the input of these sensors.

Memory 105 includes parameters and code program instructions for the processor 104. Memory 105 can also comprise parameters received from the sensors 20 and user input devices 30. Communication interface 106 enables the immersive video rendering device to communicate with the computer 40. The communication interface 106 of the processing device may be wireline interfaces (for example a bus interface, a wide area network interface, a local area network interface) or wireless interfaces (such as a IEEE 802.11 interface or a Bluetooth® interface).

Computer 40 sends data and optionally control commands to the immersive video rendering device 10. The computer 40 is in charge of processing the data, i.e., prepare them for display by the immersive video rendering device 10. Processing can be done exclusively by the computer 40 or part of the processing can be done by the computer and part by the immersive video rendering device 10. The computer 40 is connected to internet, either directly or through a gateway or network interface 50. The computer 40 receives data representative of an immersive video from the internet, processes these data (e.g., decodes them and possibly prepares the part of the video content that is going to be displayed by the immersive video rendering device 10) and sends the processed data to the immersive video rendering device 10 for display. In another embodiment, the system may also comprise local storage (not represented) where the data representative of an immersive video are stored, said local storage can be on the computer 40 or on a local server accessible through a local area network for instance (not represented).

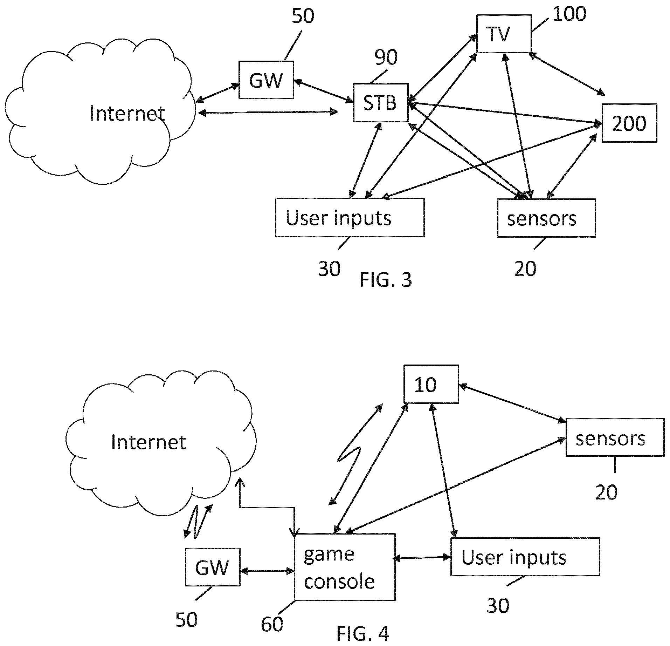

Figure 3 represents a second embodiment. In this embodiment, a STB 90 is connected to a network such as internet directly (i.e., the STB 90 comprises a network interface) or via a gateway 50. The STB 90 is connected through a wireless interface or through a wired interface to rendering devices such as a television set 100 or an immersive video rendering device 200. In addition to classic functions of a STB, STB 90 comprises processing functions to process video content for rendering on the television 100 or on any immersive video rendering device 200. These processing functions are the same as the ones that are described for computer 40 and are not described again here. Sensors 20 and user input devices 30 are also of the same type as the ones described earlier with regards to figure 2. The STB 90 obtains the data representative of the immersive video from the internet. In another embodiment, the STB 90 obtains the data representative of the immersive video from a local storage (not represented) where the data representative of the immersive video are stored.

Figure 4 represents a third embodiment related to the one represented in Figure 2. The game console 60 processes the content data. Game console 60 sends data and optionally control commands to the immersive video rendering device 10. The game console 60 is configured to process data representative of an immersive video and to send the processed data to the immersive video rendering device 10 for display. Processing can be done exclusively by the game console 60 or part of the processing can be done by the immersive video rendering device 10.

The game console 60 is connected to internet, either directly or through a gateway or network interface 50. The game console 60 obtains the data representative of the immersive video from the internet. In another embodiment, the game console 60 obtains the data representative of the immersive video from a local storage (not represented) where the data representative of the immersive video are stored, said local storage can be on the game console 60 or on a local server accessible through a local area network for instance (not represented).

The game console 60 receives data representative of an immersive video from the internet, processes these data (e.g., decodes them and possibly prepares the part of the video that is going to be displayed) and sends the processed data to the immersive video rendering device 10 for display. The game console 60 may receive data from sensors 20 and user input devices 30 and may use them to process the data representative of an immersive video obtained from the internet or from the from the local storage.

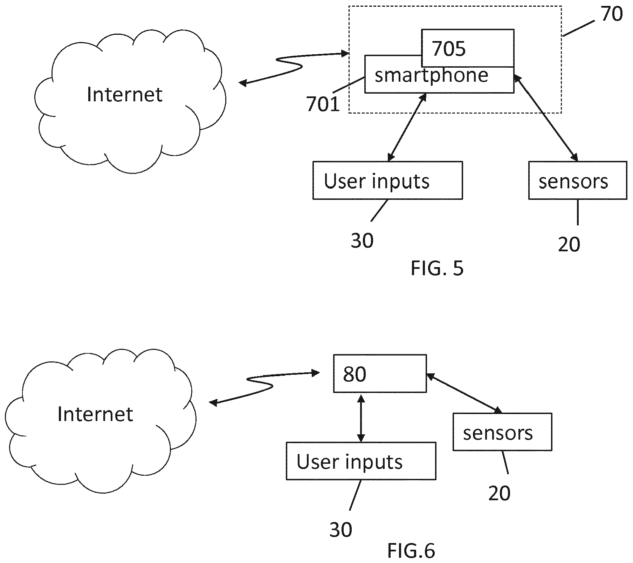

Figure 5 represents a fourth embodiment of said first type of system where the immersive video rendering device 70 is formed by a smartphone 701 inserted in a housing 705. The smartphone 701 may be connected to internet and thus may obtain data representative of an immersive video from the internet. In another embodiment, the smartphone 701 obtains data representative of an immersive video from a local storage (not represented) where the data representative of an immersive video are stored, said local storage can be on the smartphone 701 or on a local server accessible through a local area network for instance (not represented).

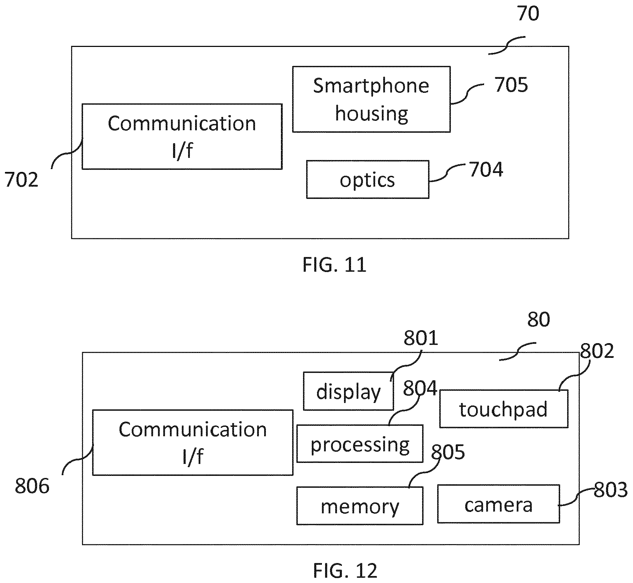

Immersive video rendering device 70 is described with reference to figure 11 which gives a preferred embodiment of immersive video rendering device 70. It optionally comprises at least one network interface 702 and the housing 705 for the smartphone 701. The smartphone 701 comprises all functions of a smartphone and a display. The display of the smartphone is used as the immersive video rendering device 70 display. Therefore, no display other than the one of the smartphone 701 is included. However, optics 704, such as lenses, are included for seeing the data on the smartphone display. The smartphone 701 is configured to process (e.g., decode and prepare for display) data representative of an immersive video possibly according to data received from the sensors 20 and from user input devices 30. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement.

Figure 6 represents a fifth embodiment of said first type of system in which the immersive video rendering device 80 comprises all functionalities for processing and displaying the data content. The system comprises an immersive video rendering device 80, sensors 20 and user input devices 30. The immersive video rendering device 80 is configured to process (e.g., decode and prepare for display) data representative of an immersive video possibly according to data received from the sensors 20 and from the user input devices 30. The immersive video rendering device 80 may be connected to internet and thus may obtain data representative of an immersive video from the internet. In another embodiment, the immersive video rendering device 80 obtains data representative of an immersive video from a local storage (not represented) where the data representative of an immersive video are stored, said local storage can be on the rendering device 80 or on a local server accessible through a local area network for instance (not represented).

The immersive video rendering device 80 is illustrated in figure 12. The immersive video rendering device comprises a display 801. The display can be for example of OLED or LCD type. The device 80 may comprise a touch surface (optional) 802 (e.g., a touchpad or a tactile screen), a camera (optional) 803, a memory 805 in connection with at least one processor 804 and at least one communication interface 806. Memory 805 comprises parameters and code program instructions for the processor 804. Memory 805 can also comprise parameters received from the sensors 20 and user input devices 30. Memory can also be large enough to store the data representative of the immersive video content. For this several types of memories can exist and memory 805 can be a single memory or can be several types of storage (SD card, hard disk, volatile or non-volatile memory...) Communication interface 806 enables the immersive video rendering device to communicate with internet network. The processor 804 processes data representative of the video in order to display them of display 801. The camera 803 captures images of the environment for an image processing step. Data are extracted from this step in order to control the immersive video rendering device.

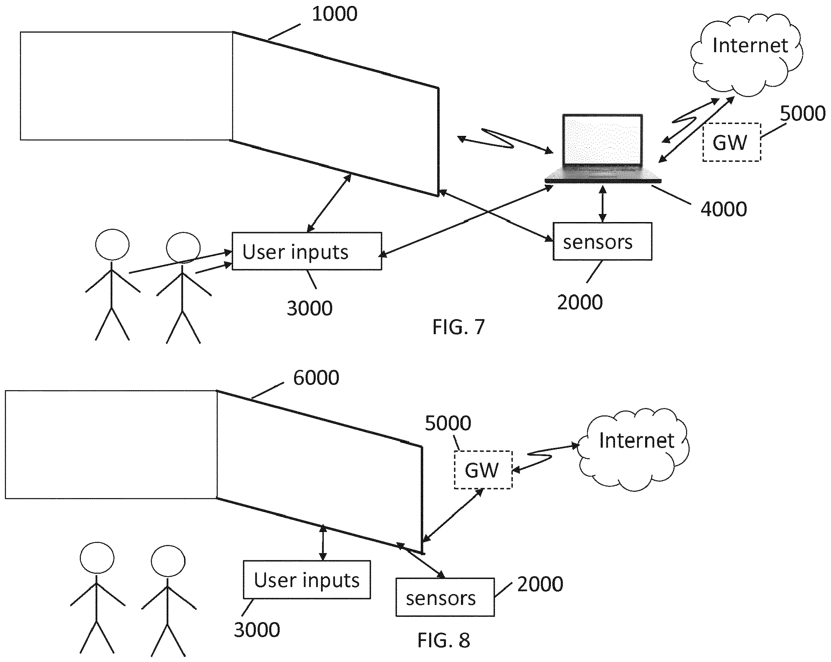

A second system, for processing augmented reality, virtual reality, or augmented virtuality content is illustrated in figures 7 to 9. Such a system comprises an immersive wall.

Figure 7 represents a system of the second type. It comprises a display 1000 which is an immersive (projective) wall which receives data from a computer 4000. The computer 4000 may receive immersive video data from the internet. The computer 4000 is usually connected to internet, either directly or through a gateway 5000 or network interface. In another embodiment, the immersive video data are obtained by the computer 4000 from a local storage (not represented) where the data representative of an immersive video are stored, said local storage can be in the computer 4000 or in a local server accessible through a local area network for instance (not represented).

This system may also comprise sensors 2000 and user input devices 3000.The immersive wall 1000 can be of OLED or LCD type. It can be equipped with one or several cameras. The immersive wall 1000 may process data received from the sensor 2000 (or the plurality of sensors 2000). The data received from the sensors 2000 may be related to lighting conditions, temperature, environment of the user, e.g., position of objects.

The immersive wall 1000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

Sensors 2000 and user input devices 3000 data may also be transmitted to the computer 4000. The computer 4000 may process the video data (e.g., decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection.

Computer 4000 sends the processed data and optionally control commands to the immersive wall 1000. The computer 4000 is configured to process the data, i.e., preparing them for display, to be displayed by the immersive wall 1000. Processing can be done exclusively by the computer 4000 or part of the processing can be done by the computer 4000 and part by the immersive wall 1000.

Figure 8 represents another system of the second type. It comprises an immersive (projective) wall 6000 which is configured to process (e.g., decode and prepare data for display) and display the video content. It further comprises sensors 2000, user input devices 3000.

The immersive wall 6000 receives immersive video data from the internet through a gateway 5000 or directly from internet. In another embodiment, the immersive video data are obtained by the immersive wall 6000 from a local storage (not represented) where the data representative of an immersive video are stored, said local storage can be in the immersive wall 6000 or in a local server accessible through a local area network for instance (not represented).

This system may also comprise sensors 2000 and user input devices 3000.The immersive wall 6000 can be of OLED or LCD type. It can be equipped with one or several cameras. The immersive wall 6000 may process data received from the sensor 2000 (or the plurality of sensors 2000). The data received from the sensors 2000 may be related to lighting conditions, temperature, environment of the user, e.g., position of objects.

The immersive wall 6000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

The immersive wall 6000 may process the video data (e.g., decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection. The immersive wall 6000 may comprise at least one communication interface to communicate with the sensors and with internet.

Figure 9 illustrates a third embodiment where the immersive wall is used for gaming. One or several gaming consoles 7000 are connected, preferably through a wireless interface to the immersive wall 6000. The immersive wall 6000 receives immersive video data from the internet through a gateway 5000 or directly from internet. In another embodiment, the immersive video data are obtained by the immersive wall 6000 from a local storage (not represented) where the data representative of an immersive video are stored, said local storage can be in the immersive wall 6000 or in a local server accessible through a local area network for instance (not represented).

Gaming console 7000 sends instructions and user input parameters to the immersive wall 6000. Immersive wall 6000 processes the immersive video content possibly according to input data received from sensors 2000 and user input devices 3000 and gaming consoles 7000 in order to prepare the content for display. The immersive wall 6000 may also comprise internal memory to store the content to be displayed.

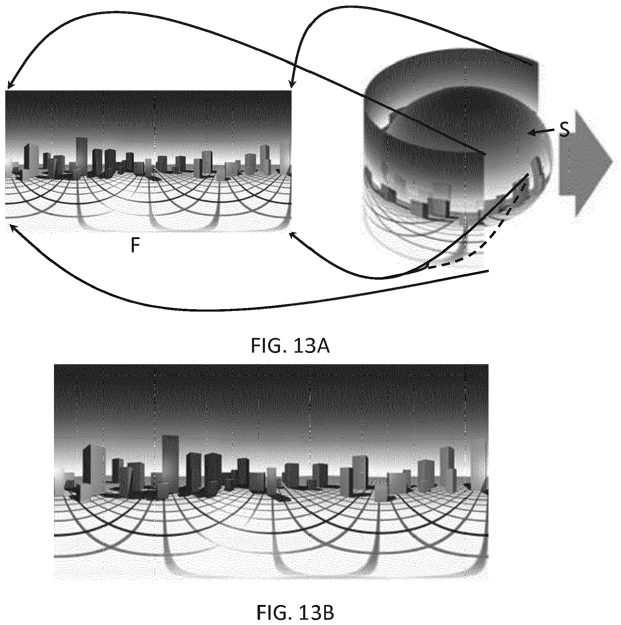

In one embodiment, we consider that the omnidirectional video is represented in a format that enables the projection of the surrounding three-dimensional (3D) surface S onto a standard rectangular frame F that is represented in a format suitable for a video codec. Various projections can be used to project 3D surfaces to two-dimensional (2D) surfaces. For example, figure 13A shows that an exemplary sphere surface S is mapped to a 2D frame F using an equirectangular projection (ERP), and figure 13B shows that an exemplary cube surface is mapped to a 2D frame using a cube mapping. Other mappings, such as pyramidal, icosahedral or octahedral mapping, can be used to map a 3D surface into a 2D frame. Such images require some new tools inside the video codec to consider the geometric properties of the image. An example of such tools is given in pending application "Motion transformation for VR". For these new tools, a flag is necessary to activate or not the tools. The syntax can then become too large and reduce the performance gain of the tools.

Another issue is that some of these tools can require additional processing and it is desirable to reduce the complexity when possible. Currently, the type of mapping used for a video is signaled without describing the use of a particular tool. A flag can be used, for example, in each coding unit to activate or deactivate the tool.

The 2D frame F can be encoded using existing video encoders, for example, encoders compliant with Google's VP9, AOMedia's AV1, MPEG-2 (ITU-T H.222/H.262), H.264/AVC (MPEG-4 Part 10, Advanced Video Coding), or H.265/HEVC (MPEG-H Part2, High Efficiency Video Coding). The 2D frame F can also be encoded with an encoder adapted to the properties of omnidirectional videos, for example, using an adapted VP9, VP10, MPEG-2, H.264/AVC, or H.265/HEVC encoder. After encoding and decoding, the decoded 2D frame can be mapped back to the corresponding 3D surface, for example, a sphere for an equi-rectangular mapping or a cube for cube mapping. The 3D surface can then be projected onto a "virtual screen" corresponding to a user's viewpoint in order to obtain the final rendered frame. The steps of decoding the 2D frame and projecting from the 3D surface to a rendered frame can be merged into a single step, where a part of the decoded frame is mapped onto the rendered frame.

For simplicity of notation, we may refer to the decoded 2D frame also as "F," and the 3D surface used in rendering also as S. It should be understood that the 2D frame to be encoded and the 2D frame to be decoded may be different due to video compression, and the 3D surface in pre-processing and the 3D surface in rendering may also be different. The terms "mapping" and "projection" may be used interchangeably, the terms "pixel" and "sample" may be used interchangeably, and the terms "frame" and "picture" may be used interchangeably.

The problem of mapping a three-dimensional (3D) surface to a rectangular surface has first been described for a typical layout of omnidirectional video, the equirectangular layout, but the general principle is applicable to any mapping from the 3D surface S to the rectangular frame F. The same principle can apply for example to the cube mapping layout.

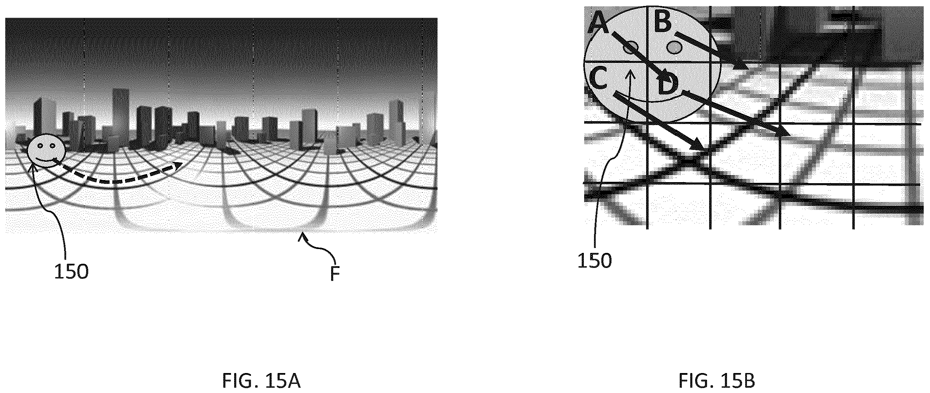

In Figures 15A and 15B, we show an example of an object moving along a straight line in the scene and the resulting apparent motion in the frame, shown by the dashed curve. The resulting motion vectors for an arbitrary Prediction Unit (PU) partition is shown on the right. As one can notice, even if the motion is perfectly straight in the rendered image, the frame to encode shows a non-uniform motion vector.

The domain of the described embodiments is the compression of 360° omnidirectional content and in particular the packing of stereo 360° videos. The equirectangular layout is one of the currently most used mapping for storing, compressing and processing the 360° captured scene. The mapping takes a spherical representation of the scene as input and maps it onto a rectangular frame, as depicted in Figure 13A.

Stereo 360° means that two omnidirectional views are produced from two different viewpoints, resulting in two different equirectangular frames. Parts of these described embodiments aim at improving the compaction of such stereo content in the framework of frame packing, which consists in including both view points in the same coded frame.

In the HEVC standard for example, frame packing is an SEI (Supplemental Enhancement Information) message, which means that it is a description of how the left and right views are packed, but these semantics do not impact the coding/decoding process. In other words, it corresponds to information carried by the bit-stream for display purpose. In HEVC, the SEI message contains an index of arrangement for indicating whether the views are packed side-by-side or top-bottom, or even temporally interleaved. The coordinates of top-left corners of each view can be potentially transmitted. They are trivially derived in the simple case where each view occupies half of the total frame surface. Relative to the described embodiments, it also contains a flag upsampled_aspect_ratio_flag which indicates if the views need to be up-sampled to be displayed, horizontally in the case of side-by-side arrangement and vertically in the case of top-bottom arrangement. Additionally, the syntax allows the display to know whether one of the views has been flipped.

Table 1 shows the exemplary SEI message that describes the frame packing arrangement in HEVC.

Table 1: Frame packing arrangement SEI message syntax in HEVC

| frame_packing_arrangement(payloadSize) { | Descriptor |
|---|---|
| frame_packing_arrangement_id | ue(v) |
| frame_packing_arrangement_cancel_flag | u(1) |
| if(!frame_packing_arrangement_cancel_flag) { | |

(continued)

| frame_packing_arrangement_type | u(7) |
|---|---|
| quincunx_sampling_flag | u(1) |
| content_interpretation_type | u(6) |
| spatial_flipping_flag | u(1) |
| frame0_flipped_flag | u(1) |
| field_views_flag | u(1) |
| current_frame_is_frame0_flag | u(1) |
| frame0_self_contained_flag | u(1) |
| frame1_self_contained_flag | u(1) |
| if(!quincunx_sampling_flag && frame_packing_arrangement_type != 5) { | |
| frame0_grid_position_x | u(4) |
| frame0_grid_position_y | u(4) |
| frame1_grid_position_x | u(4) |
| frame1_grid_position_y | u(4) |
| } | |
| **frame_packing_arrangement_reserved_byte** | u(8) |
| frame_packing_arrangement_persistence_flag | u(1) |
| } | |
| upsampled_aspect_ratio_flag | u(1) |
| } | |

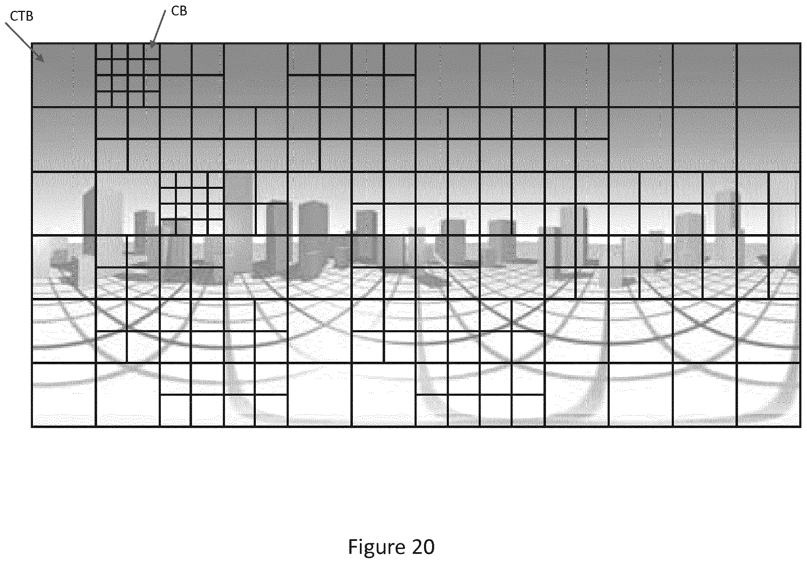

One problem addressed by the described embodiments can be stated as follows. Recent video compression standards process frames of video block by block. The size of the blocks is chosen by the encoder, depending on criteria such as compression efficiency and complexity. Figure 20 depicts an exemplary decomposition, typical of the HEVC standard, where each 64x64 Coding Tree Block (CTB) is split into Coding Blocks (CB), following a quadtree structure.

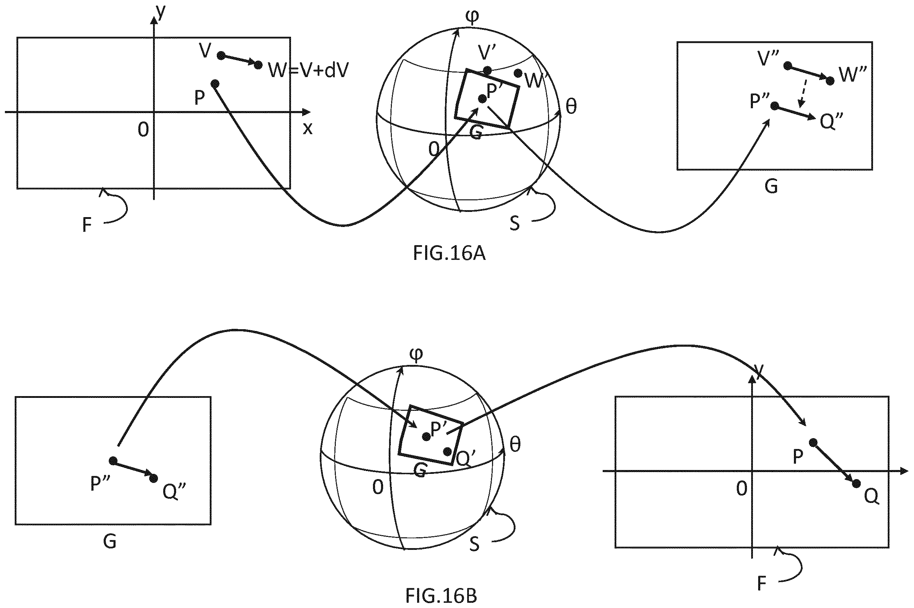

Among the omnidirectional video layouts, the equi-rectangular is one of the most popular due to the convenient mapping of the sphere to a continuous rectangular frame. In the following, the equirectangular frame is called F and a rendered frame to be displayed is denoted G, as depicted in Figure 16A. A given point P in F, is mapped at position P' on the sphere, and corresponds to the point P" in a rendered frame. The rendered frame is a rectangular image to be displayed, for instance, in a Head Mounted Display for 360° immersive experience. Its position depends on where the user is looking at.

However, this mapping has some drawbacks regarding video compression since the density of pixels in that rectangle is stationary, although the resolution should vary along the vertical axis to produce a constant resolution in the rendered frames. Figure 16A shows this relation with the equirectanglar frame F, on the left, and the corresponding density as a function of the "latitude" of vertical position. At the latitude 0, the density is the highest and decreases along the vertical axis. In other words, the width of each pixel in a rendered frame increases with the distance to the "equator" (or y=0).

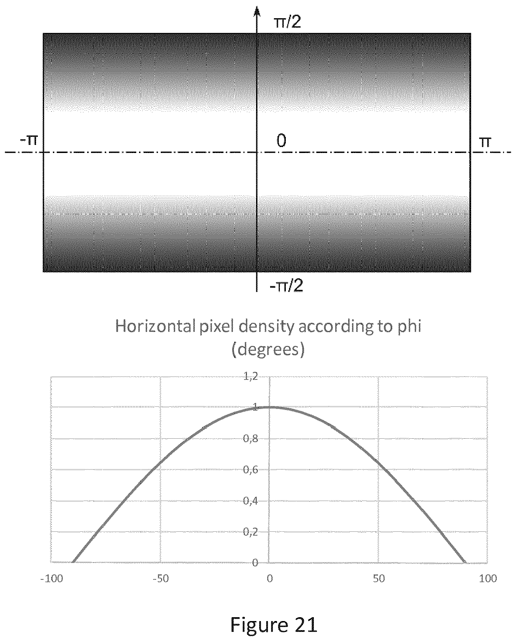

Figure 21 shows an equirectangular mapping. The width of each pixel in the rendered frame projection G is shown as a function of the vertical position. At top, the intensity depicts the pixel horizontal density, with darker shades being lower density. At bottom, the horizontal density as a function of the vertical angle from the equator.

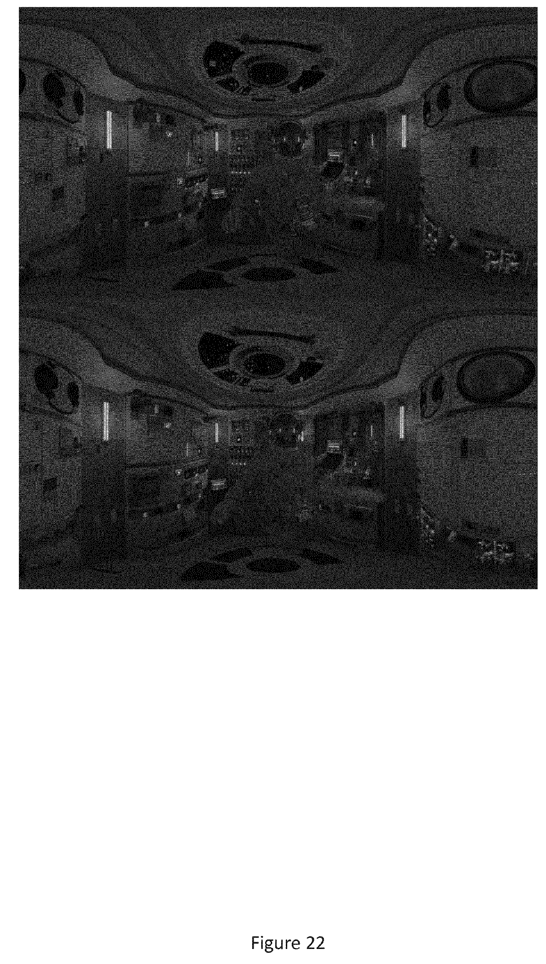

The existing frame partitioning into coding units does not take full advantage of this variation of the density of actual pixels from the equirectangular frame, once projected onto rendered frames. Same goes for the frame packing option in which, both equirectangular images would be currently packed in a side-by-side or top-bottom manner. Figure 22 shows a top-bottom arrangement, without any flipping.

The described embodiments propose solutions for a design of frame packing arrangements that take advantage of the density variations in both left and right images. Although resampling is shown in a horizontal direction in the example embodiments which follow, both horizontal and/or vertical resampling can occur, with resampling referring to either downsampling or upsampling, or some ratio of both.

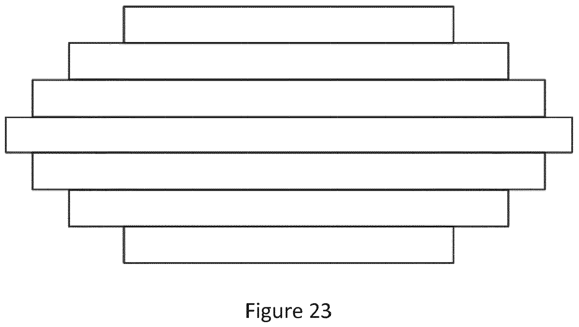

The codecs process frames of video block by block, as depicted in Figure 20. It appears relevant to cut the video vertically, block wise, in order to keep a solution compatible with existing designs. Figure 23 shows a possible distribution, where the image is no more "rectangular" but split in "tiles", whose horizontal sizes depend on their vertical position. It should be noted that the wording "tiles", here, denotes the rectangular regions sharing the same sampling and should not directly refer to the definition of tiles in HEVC, which defines specific conditions for coding.

The original equirectangular content is horizontally sub-sampled, depending on the tile location. This process allows one to reduce the surface of the signal to be compressed, without dramatically losing information since the rendered frames' quality, which is what matters, won't be much impacted since the resolution was already low, due to the mapping itself.

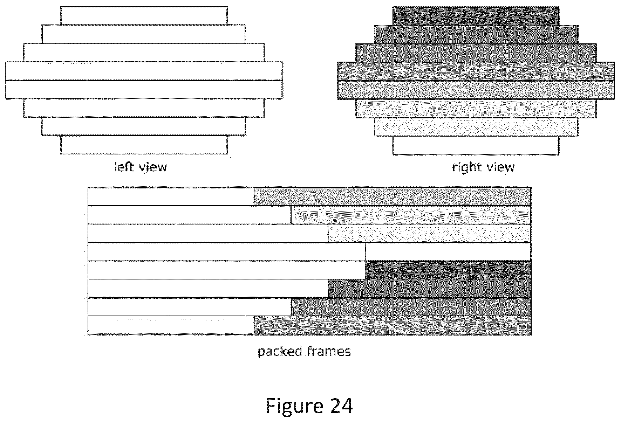

This distribution has to then be organized to fill a rectangular frame, to be efficiently compressed. In the case of frame packing, two set of tiles have to be distributed. Figure 24 gives an exemplary distribution with the left view in white and the right view represented with several shades of grey. The tiles of the left view are shifted to be horizontally aligned to the left and the tiles of the right view are packed on the right to create a rectangle frame. The right distribution of tiles is split at the middle, vertically, to create an overall rectangle shape with the left view.

It has to be noticed that the simple case depicted in Figure 24 requires a constant reduction of the tiles' width from tile to tile from the middle to the top and bottom, to ensure a rectangle packed frame. Moreover, in the example of HEVC, the frame packing implies a sampling of the constituent frames. For instance, for a side-by-side arrangement, the constituent frames are downsampled to occupy half of the total frame to be encoded. In this case, in the proposed method, the sampling per tile replaces the classical one. The sampling factor is then determined considering the tile size ratio and the required scaling for adapting the constituent tiles to the final frame size, i.e., its width. The resampling operation combines downsampling and upsampling operations, and the ratio is termed the resampling ratio.

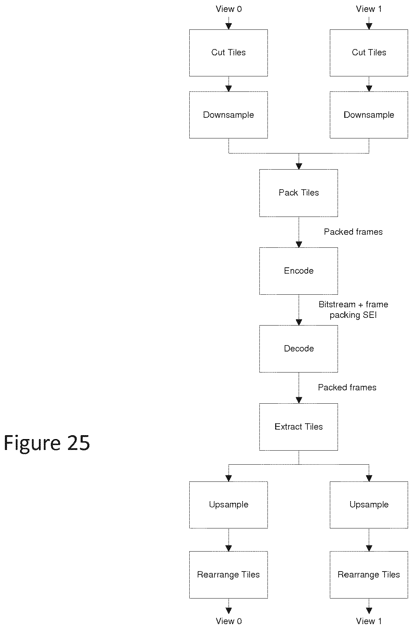

The overall process of the proposed method is represented as a flowchart in Figure 25. Both views are first split into tiles as shown on the top of Figure 24. Each tile is downsampled according to its location and the final resampling ratio considered for the frame to be encoded/decoded. The tiles are then packed to form the frame to be encoded/decoded. The encoder embeds the frame packing SEI message within the bitstream. After the decoding of the frame, the SEI message is used to separate the frames; extracts the tiles and upsamples them to reconstruct both views.

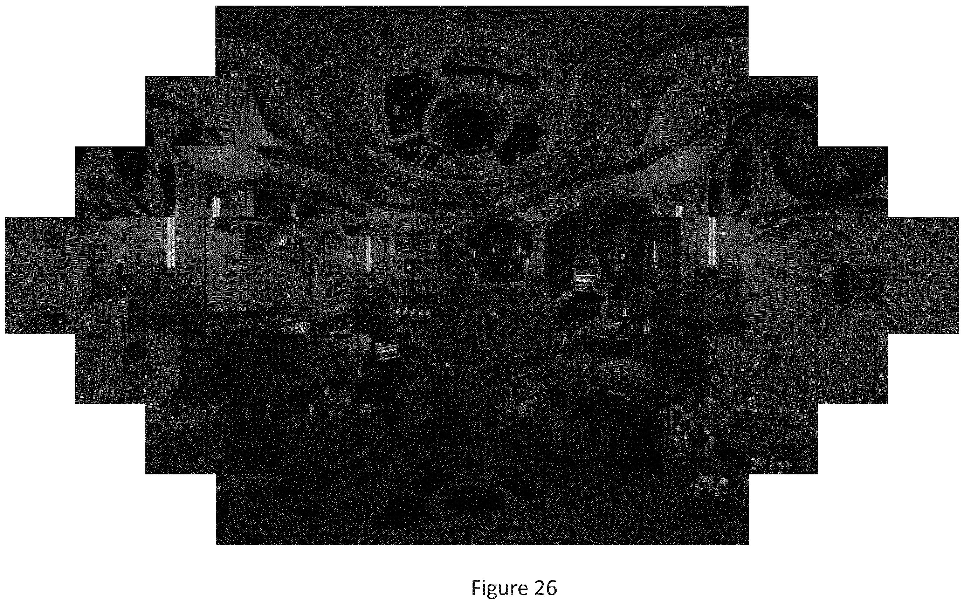

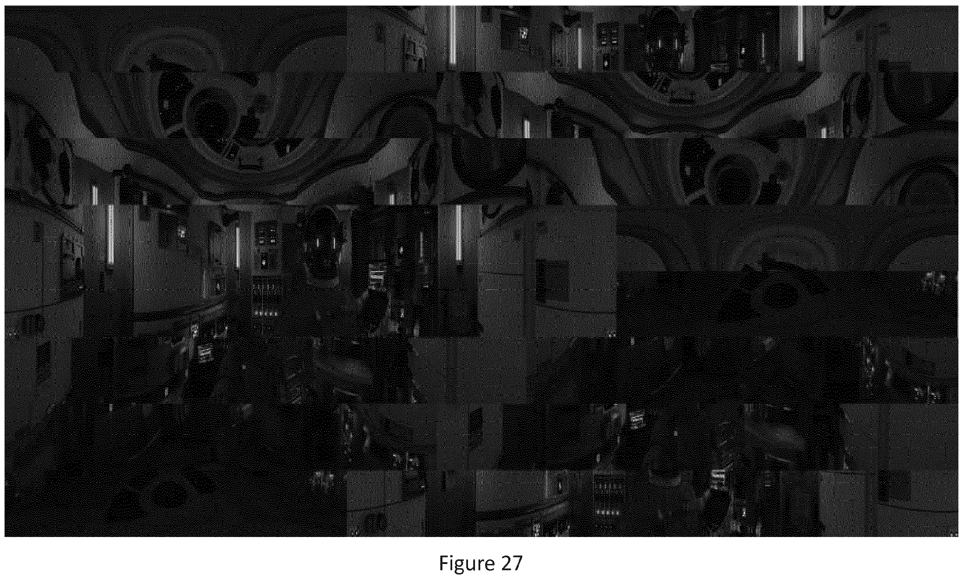

Figure 26 and Figure 27 illustrate the proposed arrangement. Figure 26 shows how the signal is resampled for each constituent frame. This resampling can be modulated by the final ratio determined by the final size of the packed frame. Figure 27 shows the final frame to be encoded.

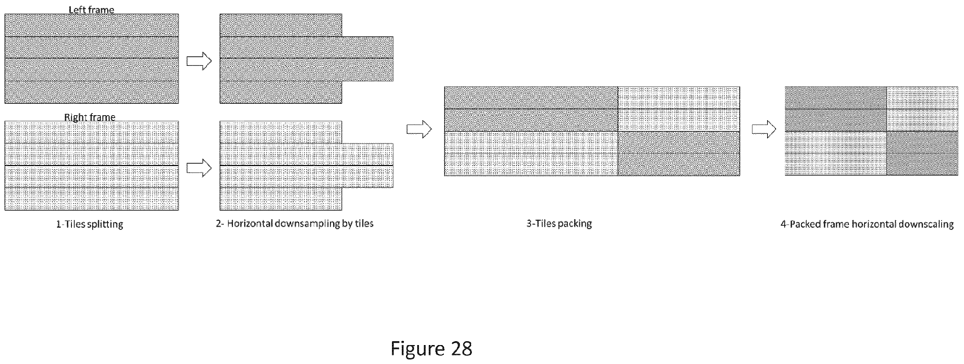

Consider the following practical example, as shown in the example of Figure 28 with four tiles. A stereo omnidirectional frame has resolution 4096x2028 for each view (left and right), with an equirectangular mapping.

1. Choose 4 horizontal tiles per frame. Because of the density image symmetry, the 2 central tiles are of the same size and could be merged into 1 tile if needed.

2. Each tile has a height h=2048/4=512 pixels. The central tiles of each view are kept with width 4096. The top and bottom tiles are downscaled with a width of:

$$w=\cos(45)*4096 = 2896 \text{ pixels}$$

3. A packed frame is created of height 2048 and width 4096+2896=6992 pixels.

4. The final frame is obtained with a horizontal downscaling of factor 4096/6992.

Two main concepts can be implemented to enable such a distribution. The first is a frame packing description for display purpose, such as Supplemental Enhancement Information (SEI) in HEVC, for example. The second concept is a set of compression tools to adapt to the induced discontinuities and sampling changes.

The frame packing description is one aspect of the present description. Consider the exemplary Frame Packing SEI syntax of HEVC, detailed in Table 1. The frame_packing_arrangement_type indicates how the frames are arranged:

- value 3 corresponds to side-by-side packing arrangement of corresponding planes of two constituent frames;
- value 4 corresponds to top-bottom packing arrangement of corresponding planes of two constituent frames;
- value 5 corresponds to a temporal interleaving of the views, such that component planes of the decoded frames in output order form a temporal interleaving of alternating first and second constituent frames.

Consequently, the proposed arrangement could be enabled using a frame_packing_arrangement_type currently not used by the HEVC standard, such as frame_packing_arrangement_type==6, or a value greater than 6. Even if the packing could be seen as a side-by-side arrangement, it has to be distinguished from the classical one.

Several ways of handling the description of the distribution can be developed in the following embodiments.

In a first embodiment, no more syntax other than frame_packing_arrangement_type (=6) is required in the case where the number of tiles and their different horizontal sampling is preset and fixed.

In a second embodiment, frame_packing_arrangement_type and dedicated syntax elements related to this type as shown in the exemplary Table 2 are used. For instance:

- nb_tiles_div2 (u(4) for example): specifies the number of tiles that vertically splits the frame between the middle horizontal line to the top and the bottom. A number of CTUs per tile, vertically, is derived using the size of the frame.
- hor_ratio (u(7) for example): specifies the maximum ratio between the size of the top or bottom tile and middle tile, vertically.

The element hor_ratio can be expressed in several ways since the sum of the middle tile's width and the extreme tiles' width corresponds to the total width of the packed frame. The total size being already known via high level syntax in the bitstream, this information can either be a ratio between the minimum and maximum width, or the width of the extreme tiles.

For example, it can be expressed as a number of CTUs, or the ratio of the number of CTUs horizontally of extreme tiles and middle tiles, in order to ensure a CTU granularity and a shorter syntax element in the SEI.

Using these elements, Figure 24 shows the proposed packing distribution. The gray levels of the right view depict the vertical order applied on the packed frame. Figure 24 can be retrieved since the intermediate tiles can have width that linearly varies between the middle tiles and extreme tiles. Indeed, this arrangement requires that the sums of sizes of tiles on each line are equal to the packed frame size.

Table 2: exemplary frame packing syntax that supports the proposed frame packing arrangement

| frame_packing_arrangement(payloadSize) { | Descriptor |
|---|---|
| frame_packing_arrangement_id | ue(v) |
| frame_packing_arrangement_cancel_flag | u(1) |
| if(!frame_packing_arrangement_cancel_flag) { | |
| frame_packing_arrangement_type | u(7) |
| quincunx_sampling_flag | u(1) |
| content_interpretation_type | u(6) |
| spatial_flipping_flag | u(1) |
| frame0_flipped_flag | u(1) |
| field_views_flag | u(1) |
| current_frame_is_frame0_flag | u(1) |
| frame0_self_contained_flag | u(1) |
| frame1_self_contained_flag | u(1) |
| if(!quincunx_sampling_flag && frame_packing_arrangement_type != 5) { | |
| frame0_grid_position_x | u(4) |
| frame0_grid_position_y | u(4) |
| frame1_grid_position_x | u(4) |
| frame1_grid_position_y | u(4) |
| } | |
| If (frame_packing_arrangement_type == 6){ | |
| nb_tiles_div2 | u(4) |
| hor_ratio | u(7) |
| } | |

(continued)

| frame_packing_arrangement_reserved_byte | u(8) |
|---|---|
| frame_packing_arrangement_persistence_flag | u(1) |
| } | |
| upsampled_aspect_ratio_flag | u(1) |
| | |
| | |
| | |
| } | |
| | |

The existing syntax enables a description of which image corresponds to the left and right views, and whether one of them is horizontally flipped.

The described embodiments allow encoding stereo omnidirectional views in the context of frame packing, i.e. encoding/decoding one rectangle frame that contains all the required information. The views are packed so that the compression performance is improved, based on the omnidirectional content properties.

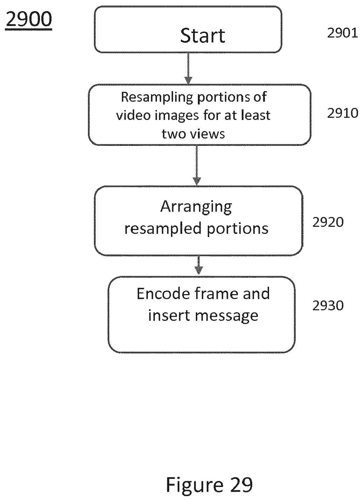

Figure 29 shows one embodiment of a method 2900 under the aspects described. The method commences at Start block 2901 and control proceeds to block 2910 for resampling portions of video images representing at least two views of a scene at corresponding times. Control proceeds from block 2910 to block 2920 for arranging resampled portions of the at least two views such that the arranged resampled portions fit into a frame. Control then proceeds from block 2920 to block 2930 for encoding the frame, the frame comprising a message indicative of at least one of the arranging and resampling operations.

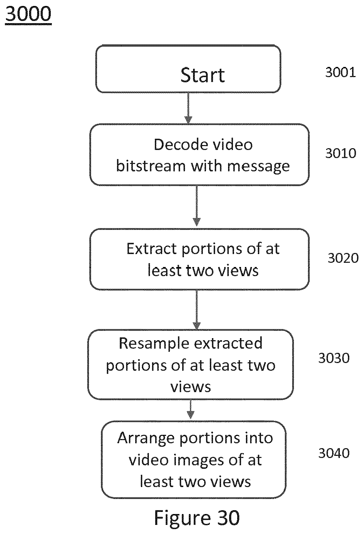

Figure 30 shows one embodiment of a method 3000 under the aspects described. The method commences at Start block 3001 and control proceeds to block 3010 for decoding a frame of video from a bitstream, also comprising a message. Control proceeds from block 3010 to block 3020 for extracting portions of at least two views from the decoded frame. Control proceeds from block 3020 to block 3030 for resampling the extracted portions of the at least two views. Control proceeds from block 3030 to block 3040 for arranging the resampled extracted portions into video images representing the at least two views, wherein at least one of the extracting, resampling and arranging steps is based on the message.

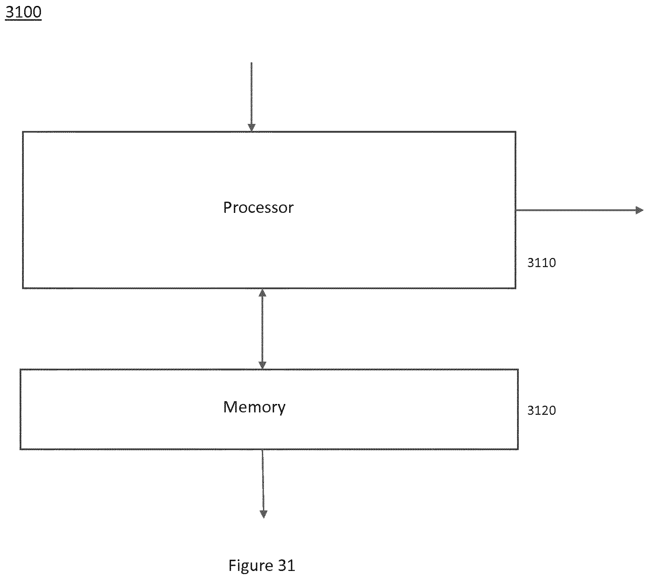

Figure 31 shows one embodiment of an apparatus 3100 for coding or decoding a block of video data. The apparatus comprises Processor 3110 which has input and output ports and is in signal connectivity with Memory 3120, also having input and output ports. The apparatus can execute any of the aforementioned method embodiments, or variations.

The functions of the various elements shown in the figures can be provided using dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage.

Other hardware, conventional and/or custom, can also be included. Similarly, any switches shown in the figures are conceptual only. Their function can be carried out through the operation of program logic, through dedicated logic, through the interaction of program control and dedicated logic, or even manually, the particular technique being selectable by the implementer as more specifically understood from the context.

The present description illustrates the present ideas. It will thus be appreciated that those skilled in the art will be able to devise various arrangements that, although not explicitly described or shown herein, embody the present ideas and are included within its scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which can be substantially represented in computer readable media and so executed by a computer or processor, whether or not such computer or processor is explicitly shown.

In the claims herein, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

In conclusion, methods and apparatus to enable tools and operations for video coding related to stereo omnidirectional video with equi-rectangular projections are described. These techniques provide a method of frame packing to fit at least two views into a frame.

**Claims**

1. A method, comprising:

   resampling portions of video images representing at least two views of a scene at corresponding times;
   arranging resampled portions of the at least two views such that said arranged resampled portions fit into a frame; and,
   encoding the frame, said frame comprising a message indicative of at least one of said arranging and resampling operations.

2. A method, comprising:

   decoding a frame of video from a bitstream, also comprising a message;
   extracting portions of at least two views from said decoded frame;
   resampling said extracted portions of the at least two views; and,
   arranging said resampled extracted portions into video images representing the at least two views, wherein at least one of said extracting, resampling and arranging is based on said message.

3. An apparatus for coding at least a portion of video data, comprising:

   a memory, and
   a processor, configured to perform:

      resampling portions of video images representing at least two views of a scene at corresponding times;
      arranging resampled portions of the at least two views such that said arranged resampled portions fit into a frame; and,
      encoding the frame, said frame comprising a message indicative of at least one of said arranging and resampling operations.

4. An apparatus for decoding at least a portion of video data, comprising:

   a memory, and
   a processor, configured to perform:

      decoding a frame of video from a bitstream, also comprising a message;

extracting portions of at least two views from said decoded frame;
resampling said extracted portions of the at least two views; and,
arranging said resampled extracted portions into video images representing the at least two views, wherein at least one of said extracting, resampling and arranging is based on said message.

5. The method of Claim 1 or 2, or the apparatus of Claim 3 or 4, wherein said resampling is performed by a ratio determined by a frame size.

6. The method of Claim 1 or 2, or the apparatus of Claim 3 or 4, wherein the at least two views are part of a stereo omnidirectional frame.

7. The method or the apparatus of Claim 6, wherein an equirectangular mapping is performed from a sphere to obtain said at least two views.

8. The method of Claim 1 or 2, or the apparatus of Claim 3 or 4, wherein resampling is performed horizontally.

9. The method of Claim 1 or 2, or the apparatus of Claim 3 or 4, wherein a number of said portions is fixed.

10. The method of Claim 1 or 2, or the apparatus of Claim 3 or 4, wherein a resampling ratio for said portions is fixed.

11. The method of Claim 1 or 2, or the apparatus of Claim 3 or 4, wherein said message is located in a high-level syntax element of a video bitstream.

12. The method of Claim 1 or 2, or the apparatus of Claim 3 or 4, wherein said arranging can be performed by packing portions of said at least two views side-by-side, top-bottom or temporally interleaved.

13. A non-transitory computer readable medium containing data content generated according to the method of any one of claims 1 and 5 to 12, or by the apparatus of any one of claims 3 and 5 to 12, for playback using a processor.

14. A signal comprising video data generated according to the method of any one of claims 1 and 5 to 12, or by the apparatus of any one of claims 3 and 5 to 12, for playback using a processor.

15. A computer program product comprising instructions which, when the program is executed by a computer, cause the computer to carry out the method of any one of claims 1, 2 and 5 to 12.

EP 3 474 550 A1

Pre-Processing → Encoding → N/W I/R ↯ N/W I/R → Decoding → Playing → Rendering

110  120  130  140  150  160  170

FIG. 1

Internet ↔ computer

GW 50

Immersive Video Rendering Device 10

40

sensors 20

User inputs 30

FIG. 2

FIG. 3

FIG. 4

70

705

smartphone

701

sensors

20

User inputs

30

Internet

FIG. 5

80

sensors

20

User inputs

30

Internet

FIG.6

1000

Internet

5000

GW

4000

User inputs

3000

sensors

2000

FIG. 7

6000

5000

GW

Internet

User inputs

sensors

2000

3000

FIG. 8

FIG. 9

FIG. 10

FIG. 11

FIG. 12

FIG. 13A

FIG. 13B

FIG. 14B

FIG. 14A

FIG. 15B

FIG. 15A

FIG.16A

FIG.16B

Figure 17

Figure 18

300

| 330 | 340 | 350 |
| Entropy Decoding | Inverse Quantization | Inverse Transform |

355

370

360
Intra Prediction

375
Motion Compensation

365

In-loop Filters

380
Reference Picture Buffer

Figure 19

Figure 20

π/2

-π          0          π

-π/2

Horizontal pixel density according to phi
(degrees)

Figure 21

Figure 22

Figure 23

right view

left view

packed frames

Figure 24

Figure 25

Figure 26

Figure 27

Left frame

Right frame

1-Tiles splitting  2- Horizontal downsampling by tiles  3-Tiles packing  4-Packed frame horizontal downscaling

Figure 28

2900

Start — 2901

Resampling portions of
video images for at least
two views — 2910

Arranging
resampled portions — 2920

Encode frame and
insert message — 2930

Figure 29

EP 3 474 550 A1

<u>3000</u>

Figure 30

3100

Processor

3110

Memory

3120

Figure 31

| | Europäisches Patentamt European Patent Office Office européen des brevets | **EUROPEAN SEARCH REPORT** | Application Number EP 17 30 6428 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/162911 A1 (NOKIA TECHNOLOGIES OY [FI]) 28 September 2017 (2017-09-28) * page 38, lines 21-34; figures 10,11 * * page 59, lines 1-32 * * page 56, lines 5-26 * * page 39, lines 36-38 * ----- | 1-15 | INV. H04N19/46 H04N19/80 H04N19/597 H04N21/81 H04N13/00 H04N19/59 H04N21/236 |
| X | Ramin Ghaznavi Youvalari: "360-Degree Panoramic Video Coding", , 1 August 2016 (2016-08-01), XP055340235, Retrieved from the Internet: URL:http://dspace.cc.tut.fi/dpub/bitstream /handle/123456789/24326/ghaznavi.pdf?seque nce=1&isAllowed=y [retrieved on 2017-01-30] * page 15 - page 16 * ----- | 1-4, 13-15 | |
| A | HANNUKSELA (NOKIA) M M: "On the relation of frame packing arrangement and region-wise packing SEI messages", 29. JCT-VC MEETING; 23-10-2017 - 27-10-2017; MACAU; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-AC0028, 10 October 2017 (2017-10-10), XP030118303, * page 2, lines 1-5 * ----- | 1-15 | |
| A | PODBORSKI D: "Virtual Reality And Dash", INTERNATIONAL BROADCASTING CONFERENCE 2017; 14 SEPTEMBER 2017 - 18 SEPTEMBER 2017; AMSTERDAM,, no. IBC-2017-18, 14 September 2017 (2017-09-14), XP030082665, * the whole document * ----- | 1-15 | |

TECHNICAL FIELDS SEARCHED (IPC)

H04N

-/--

The present search report has been drawn up for all claims

| Place of search | Date of completion of the search | Examiner |
|---|---|---|
| Munich | 26 March 2018 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 17 30 6428

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MATT YU ET AL: "Content Adaptive Representations of Omnidirectional Videos for Cinematic Virtual Reality", IMMERSIVE MEDIA EXPERIENCES, ACM, 2 PENN PLAZA, SUITE 701 NEW YORK NY 10121-0701 USA, 30 October 2015 (2015-10-30), pages 1-6, XP058074923, DOI: 10.1145/2814347.2814348 ISBN: 978-1-4503-3745-8 * the whole document * ----- | 1-15 | |

TECHNICAL FIELDS
SEARCHED      (IPC)

The present search report has been drawn up for all claims

| Place of search | Date of completion of the search | Examiner |
|---|---|---|
| Munich | 26 March 2018 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 17 30 6428

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2018

| Patent document cited in search report | Publication date | Patent family member(s) | Publication date |
|---|---|---|---|
| WO 2017162911 A1 | 28-09-2017 | NONE | |

EPO FORM P0459

For more details about this annex : see Official Journal of the European Patent Office, No. 12/82